# FASCICULE DE BREVET EUROPEEN

(11) **EP 4 073 774 B1**
(45) Date de publication et mention de la délivrance du brevet: **07.08.2024**
(21) Numéro de dépôt: 20828537.9
(22) Date de dépôt: 01.12.2020
(51) Int. Cl.: G08B 25/12, B60R 11/02

(54) **SYSTÈME D'APPEL D'URGENCE INTÉGRÉ DANS LA PLANCHE DE BORD D'UN VÉHICULE AUTOMOBILE**
IN DAS ARMATURENBRETT EINES KRAFTFAHRZEUGES EINGEBAUTES NOTRUFSYSTEM
EMERGENCY CALL SYSTEM BUILT INTO THE DASHBOARD OF A MOTOR VEHICLE

(30) Priorité: 10.12.2019 FR 1914095
(43) Date de publication de la demande: 19.10.2022
(73) Titulaire: Stellantis Auto SAS, 78300 Poissy (FR)
(72) Inventeur: COMBEAU, Frederic, 25750 DESANDANS (FR); LEGRAND, Arnaud, 25200 MONTBELIARD (FR); MARTIN, Philippe, 25200 MONTBELIARD (FR); VALDUGA, Frederic, 90100 SUARCE (FR); HERMEN, Frederic, 25250 BEUTAL (FR)
(86) Numéro de dépôt international: PCT/FR2020/052235
(87) Numéro de publication internationale: WO 2021/116559

(56) Documents cités:
- WO-A1-99/42966
- DE-A1- 3 010 817
- US-B2- 9 868 334

## Description

### Domaine technique

La présente invention revendique la priorité de la demande française 1914095 déposée le 10 Décembre 2019.

L'invention a trait au domaine des véhicules automobiles, et, plus particulièrement, à l'intégration d'un système d'appel d'urgence dans un véhicule automobile.

### Technique antérieure

Un véhicule automobile comprend généralement au moins une place conducteur et une place passager, la place conducteur comprenant un pédalier de commande du véhicule. À l'avant des places conducteur et passager et au-dessus du pédalier s'étend une planche de bord du véhicule, qui comprend divers équipements selon le modèle ou la gamme du véhicule. Les nombreux équipements déjà présents sur cette planche de bord peuvent rendre difficile l'installation d'équipements supplémentaires.

Récemment, les normes européennes ont rendu obligatoire l'installation, dans les nouveaux véhicules, d'un coussin gonflable adapté à la protection des genoux. De fait, la localisation de ce coussin, à l'état replié, est nécessairement au niveau de la planche de bord du véhicule, à l'arrière et en dessous du volant dans le cas de la place conducteur.

De manière additionnelle, les normes européennes ont également rendu obligatoire la présence d'un système d'appel d'urgence dans les véhicules. De manière préférentielle, ce système est localisé au niveau de la planche de bord ou au niveau de la baie avant du véhicule. Celui-ci doit être facile d'accès pour permettre un appel aux services de secours.

La présence d'un coussin gonflable genoux et d'autres équipements, comme par exemple de multiples haut-parleurs et un vide-poche d'une taille suffisante, réduit les zones disponibles pour placer le système d'appel d'urgence. Aussi, le système d'appel d'urgence doit rester opérationnel suite à un choc, notamment un choc avant susceptible de déplacer le pédalier. L'intégrité du coussin gonflable genoux doit également être conservée lors d'un choc avant.

Le document de brevet publié DE 199 06 447 A1 divulgue un support apte à contenir, à l'état replié, un coussin gonflable pour les genoux, le support étant positionné sous une planche de bord. Ce support comprend un boîtier maintenu au-dessus des genoux par deux bras de fixation, le premier bras s'attachant à une traverse s'étendant à l'avant de la place conducteur ; le deuxième bras s'attachant à une aile avant du véhicule.

Le document DE102012020016 divulgue le montage de l'haut parleur d'un système d'appel d'urgence sous la planche de bord d'un véhicule.

### Exposé de l'invention

L'invention a pour objectif de pallier au moins un des inconvénients de l'état de la technique susmentionné. Plus particulièrement, l'invention a pour objectif de permettre l'installation d'un système d'appel d'urgence sur une planche de bord de véhicule automobile lorsque celle-ci comprend un dispositif de coussin gonflable genoux pour le conducteur, tout en respectant les contraintes sécuritaires tant pour le système d'appel d'urgence que pour le dispositif de coussin gonflable genoux. L'invention a pour objet un véhicule automobile comprenant : une place conducteur avec un pédalier de commande du véhicule et une place passager ; une planche de bord s'étendant transversalement devant les places conducteur et passager ; un dispositif de coussin gonflable disposé sous la planche de bord en face de la place conducteur et configuré pour se déployer en direction des genoux du conducteur ; remarquable en ce que le véhicule comprend, en outre : un haut-parleur d'un système d'appel d'urgence disposé sous la planche de bord et latéralement au pédalier du côté latéral extérieur dudit pédalier, le système d'appel d'urgence comprenant une rampe d'évitement disposée latéralement au haut-parleur du côté du pédalier, ladite rampe d'évitement étant configurée pour, en cas de choc frontal déplaçant le pédalier vers l'arrière, permettre le glissement dudit pédalier le long du haut-parleur et déplacer latéralement vers l'extérieur le haut-parleur.

Selon un mode avantageux de l'invention, le haut-parleur est logé dans un boîtier formant une enceinte.

Selon un mode avantageux de l'invention, l'enceinte forme une ouverture dirigée vers le bas et logeant le haut-parleur également dirigé vers le bas.

Selon un mode avantageux de l'invention, le boîtier comprend, à une portion supérieure dudit boîtier délimitant le fond de l'enceinte, une patte de fixation.

Selon un mode avantageux de l'invention, le déplacement latéral du haut-parleur est par pivotement autour de la patte de fixation.

Selon un mode avantageux de l'invention, la rampe d'évitement est solidaire du boîtier.

Selon un mode avantageux de l'invention, la rampe d'évitement est formée sur une platine de montage du haut-parleur au boîtier.

Selon un mode avantageux de l'invention, la place conducteur est située du côté droit du véhicule.

Selon un mode avantageux de l'invention, la pédale d'accélérateur est configurée pour glisser le long de la rampe d'évidement.

Les mesures de l'invention sont intéressantes en ce qu'elles vont permettre une installation d'un système d'appel d'urgence à une planche de bord de véhicule automobile déjà équipée de nombreux accessoires, comme un dispositif de coussin gonflable genoux pour le conducteur et éventuellement plusieurs haut-parleurs, tout en évitant une détérioration du système d'appel d'urgence et du dispositif de coussin gonflable genoux lors d'un déplacement du pédalier en cas de choc avant. Le système d'appel d'urgence est installé côté conducteur afin de garder une taille identique du vide poche (côté passager), que le véhicule ait une direction à droite ou une direction à gauche. L'emplacement latéralement et du côté latéral extérieur au pédalier du système d'appel d'urgence est particulièrement intéressant car il exploite une place disponible et présentant une interférence minimale avec le pédalier. Dans le cas d'une conduite à droite, le système d'appel d'urgence est adjacent à la pédale d'accélérateur et dans le cas d'une conduite à gauche, le système d'appel d'urgence est adjacent à la pédale d'embrayage (si présente) ou à la pédale de frein. De plus, la portion inférieure avant du boîtier, qui s'étend vers l'avant du véhicule, réceptionne et accueille une partie de la pédale d'accélérateur lors d'un choc avant de faible intensité, de manière à ne pas endommager le système d'appel d'urgence. La rampe d'évitement du boîtier du système d'appel d'urgence est orientée vers le pédalier, ce qui permet audit système, lors d'un choc conduisant au déplacement vers l'arrière de la pédale d'accélérateur, de se déplacer latéralement vers l'extérieur du véhicule. Ce déplacement latéral du boîtier est également facilité par le rattachement dudit boîtier à la traverse via une vis de fixation, permettant ainsi le pivotement du boîtier autour de la patte de fixation, et évitant des dommages au système d'appel d'urgence. Les portions sécables de la planche de bord facilitent sa rupture lors d'un choc de plus forte intensité, donc aident au déplacement latéral du boîtier du système. Enfin, le boîtier est facile à fabriquer, grâce à des matériaux et des méthodes connus de l'homme du métier, et facile à monter sur le véhicule. Il est donc peu coûteux. D'autres caractéristiques et avantages de la présente invention seront mieux compris à l'aide de la description et des dessins.

### Brève description des dessins

[Fig 1] est une vue de l'intérieur d'un véhicule automobile selon l'invention ;
[Fig 2] représente une vue éclatée d'un système d'appel d'urgence selon l'invention ;
[Fig 3] représente une vue du système d'appel d'urgence de la figure 2, après son assemblage ;
[Fig 4] représente une vue de l'avant du système d'appel d'urgence de la figure 3, monté sur une planche de bord du véhicule ;
[Fig 5] représente une vue du dessus du système d'appel d'urgence monté sur la planche de bord de la figure 4 ;
[Fig 6] représente une vue du dessous du système d'appel d'urgence monté sur la planche de bord des figures 4 et 5 ;
[Fig 7] représente une vue de l'avant du système d'appel d'urgence monté sur le véhicule, avant un choc frontal ;
[Fig 8] représente une vue de l'avant du système d'appel d'urgence monté sur le véhicule, après un choc frontal, lorsque le choc est de forte intensité ;
[Fig 9] représente une vue de l'avant du système d'appel d'urgence monté sur le véhicule, après un choc frontal, lorsque le choc est de faible intensité.

### Description détaillée

L'avant et l'arrière sont définis dans les figures ci-dessous suivant le sens de déplacement du véhicule. Les figures représentent un véhicule automobile dont la direction se trouve à droite, mais l'invention peut également s'appliquer à un véhicule automobile dont la direction se trouve à gauche.

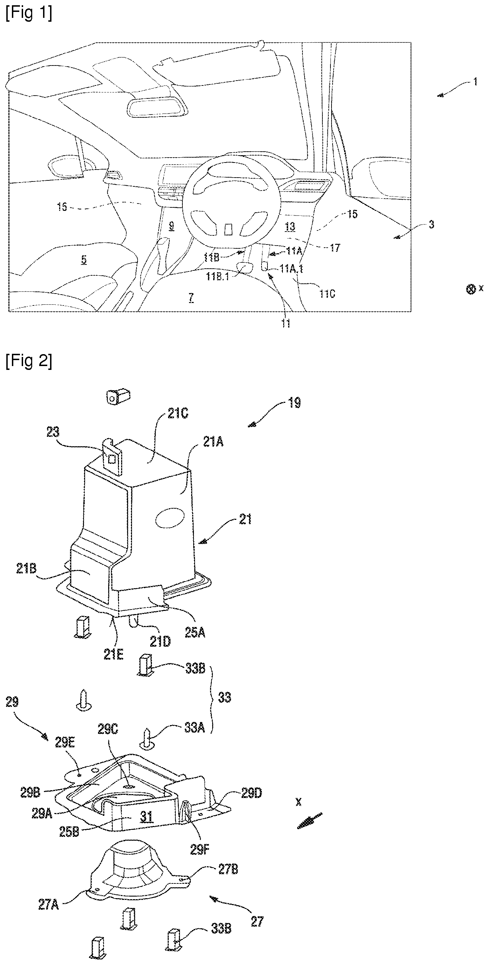

La figure 1 représente une vue de l'intérieur d'un véhicule automobile selon l'invention.

Un véhicule automobile 1 comprend généralement, dans un habitacle 3, au moins une place passager 5 et une place conducteur 7 séparées par une console centrale 9. Cette console 9 comprend divers dispositifs généralement nécessaires au bon fonctionnement du véhicule 1, tels qu'un levier de vitesse ou un frein à main par exemple. Sur cette figure, comme le véhicule 1 est un véhicule 1 à direction à droite, la place passager 5 est positionnée à gauche, et la place conducteur 7 à droite. Les places (5, 7) sont donc inversées dans un véhicule 1 à direction à gauche.

À l'avant de la place conducteur 7 se trouve un pédalier de commande 11 du véhicule 1. Ce pédalier 11 comprend au moins une pédale d'accélérateur 11A et une pédale de frein 11B, et peut éventuellement comprendre une pédale d'embrayage (non représentée sur ces figures). Chaque pédale (11A, 11B) comprend au moins un patin (11A.1, 11B.1), le patin (11A.1, 11B.1) de chaque pédale (11A, 11B) étant actionné par le conducteur. À l'avant des places passager 5 et conducteur 7 se trouve également une planche de bord 13. Elle s'étend transversalement entre la console centrale 9 et une aile avant 15 du véhicule 1. En dessous de cette planche de bord 13 et devant la place conducteur 7 se trouve un dispositif de coussin gonflable 17, ce dispositif 17 étant configuré pour se déployer en direction des genoux du conducteur lors d'un choc à l'avant du véhicule 1. Avantageusement, le pédalier de commande 11 comprend un côté latéral extérieur 11C, positionné à proximité de l'aile avant 15 droite du véhicule 1.

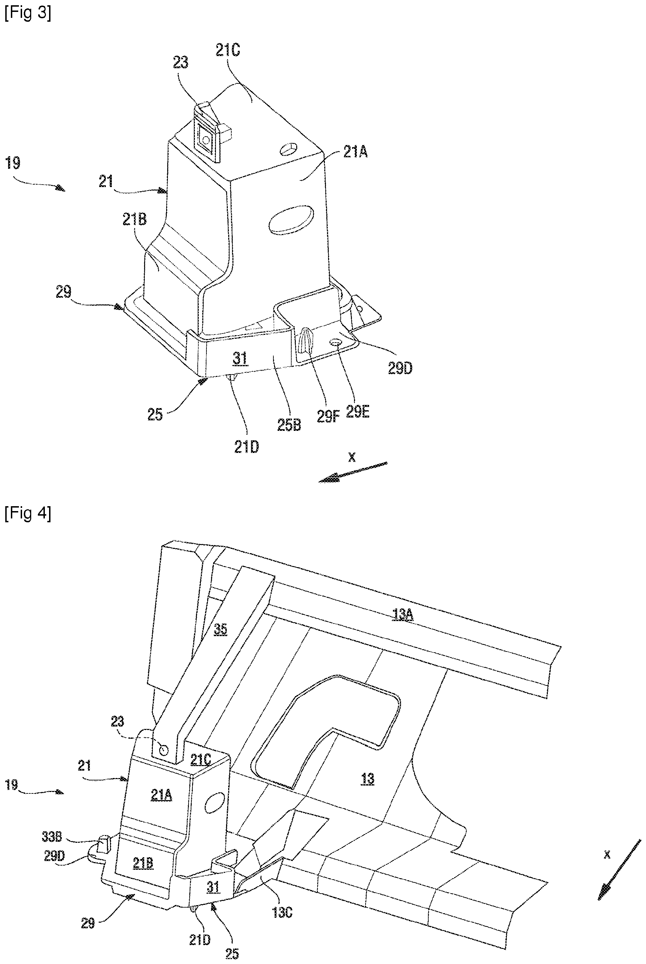

Les figures 2 et 3 montrent deux vues d'un système d'appel d'urgence selon l'invention.

Un système d'appel d'urgence 19 sert au conducteur ou au passager du véhicule à contacter les services de secours en cas d'accident. Le système 19 selon l'invention comprend au moins un boîtier 21 formant une enceinte. Ce boîtier 21 comprend une portion supérieure 21A et une portion inférieure 21B avant, s'étendant sur le tiers inférieur avant du boîtier 21. La portion supérieure 21A du boîtier 21 délimite un fond 21C de l'enceinte, sur lequel est fixé une patte de fixation 23. Le boîtier 21 comprend, en outre, des éléments de fixation 21D, préférentiellement des pions 21D, positionnés sur une face inférieure 21E du boîtier 21.

L'enceinte formée par le boîtier 21 présente en outre une ouverture (non visible sur ces figures) dirigée vers le bas, qui loge un haut-parleur 27 du système d'appel d'urgence 19. Ce haut-parleur 27 est également dirigé vers le bas. Le haut-parleur 27 présente des pattes de fixation 27A, préférentiellement au nombre de trois et régulièrement réparties autour dudit haut-parleur 27, les pattes 27A présentant, chacune, un orifice de fixation 27B à une platine de montage 29 du haut-parleur 27 au boîtier 21.

La platine de montage 29 comprend un orifice central 29A réceptionnant le haut-parleur 27 positionné dans une portion principale 29B de la platine 29. Latéralement à l'orifice central 29A et dans la portion principale 29B se trouvent des orifices de fixation 29C, complémentaires aux orifices de fixation 27B des pattes de fixation 27A du haut-parleur 27.

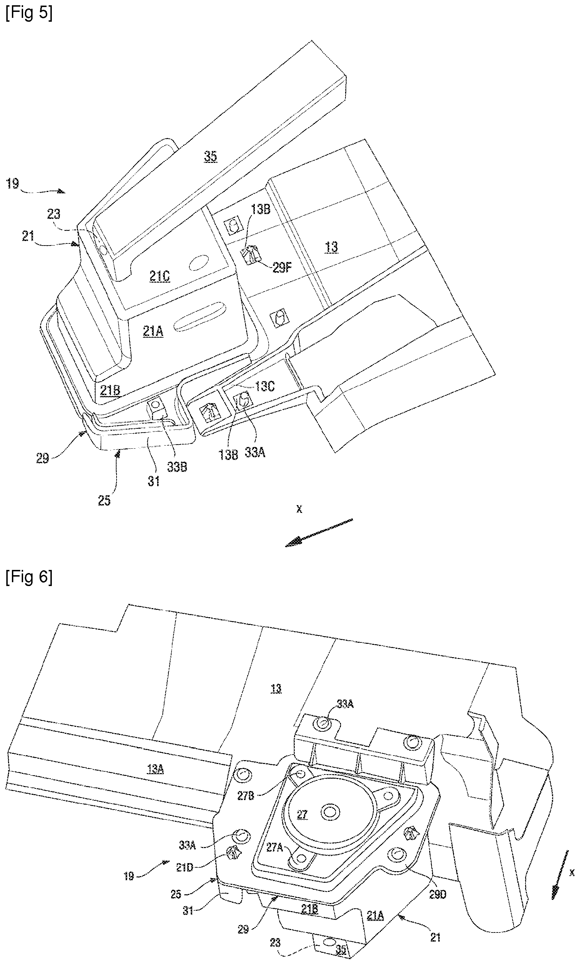

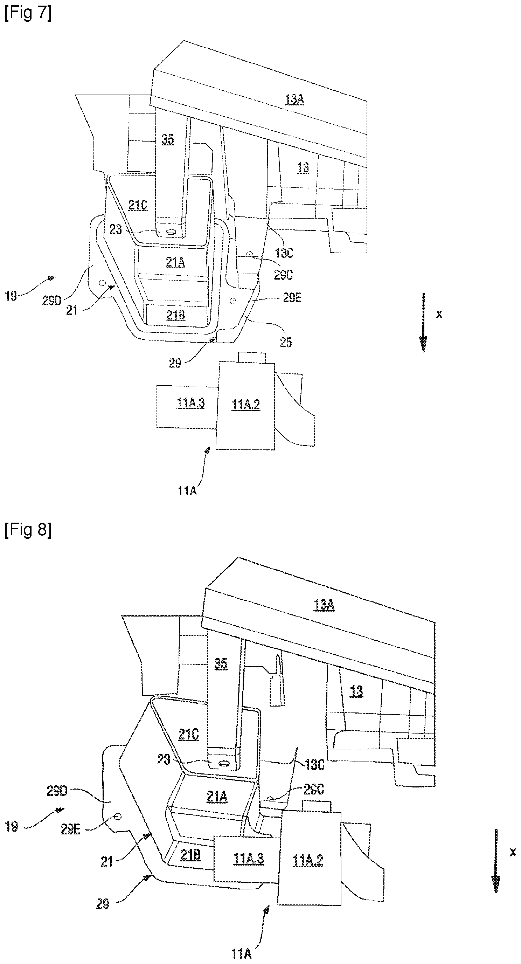

Le système d'appel d'urgence 19 comprend, en outre, une rampe d'évitement 25 solidaire du boîtier 21, et formant un angle inférieur à 45° par rapport à la face latérale du boîtier 21. Cette rampe 25 comprend une première portion 25A, positionnée latéralement au boîtier 21 et du côté du pédalier (visible à la figure 1) lorsque le système d'appel d'urgence 19 est monté sur le véhicule. La première portion 25A de la rampe 25 s'étend depuis l'avant de la portion inférieure 21B du boîtier 21, vers l'arrière dudit boîtier 21. La rampe d'évitement 25 comprend une deuxième portion 25B, positionnée sur un côté latéral gauche de la platine de montage 29 lorsque le système d'appel d'urgence 19 est monté dans le véhicule, cette deuxième portion 25B présentant une paroi 31 qui facilite l'évitement de la pédale d'accélérateur lors d'un choc (voir figures 7 à 9). Des portions latérales 29D de la platine 29 présentent en outre des orifices de fixation 29E de la platine 29 à la planche de bord (visible aux figures 4 à 6), ces orifices 29E permettant de réceptionner des éléments de fixation 33 pouvant être des vis 33A, des écrous 33B, ou les éléments de fixation 21D du boîtier 21. Ces éléments de fixation (33, 33A, 33B) servent également à la fixation entre le boîtier 21 et la platine de montage 29. Les portions latérales 29D comprennent en outre des éléments de fixation 29F à la planche de bord (visible aux figures 4 à 6).

Ainsi, le haut-parleur 27 est monté dans l'orifice central 29A de la platine de montage 29. Puis la platine 29 et le haut-parleur 27 sont rattachés au boîtier 21, le haut-parleur 27 étant logé dans le boîtier 21.

Les figures 4, 5 et 6 montrent différentes vues du système d'appel d'urgence monté sur la planche de bord du véhicule.

La planche de bord 13 comprend également une traverse 13A, montée en haut de ladite planche 13 entre l'aile avant et la console centrale du véhicule (visibles à la figure 1). Cette traverse 13A aide au maintien du système d'appel d'urgence 19 par le biais d'une pièce de fixation 35, qui est rattachée à la patte de fixation 23 du boîtier 21. La planche de bord 13 comprend en outre des orifices 13B qui vont réceptionner les éléments de fixation 29F du système d'appel d'urgence 19. Les éléments de fixation 33A servent également au maintien de la planche de bord 13 avec le système d'appel d'urgence 19, et plus particulièrement, avec les portions latérales 29D de la platine de montage 29 dudit système 19. La planche 13 présente également des portions sécables 13C aptes à permettre la rupture de la planche de bord 13 en cas de choc. Le système d'appel d'urgence 19 est positionné latéralement au pédalier (figure 1), du côté latéral extérieur (visible à la figure 1) audit pédalier.

Les figures 7 à 9 reprennent les figures du système d'appel d'urgence lors d'un choc.

La figure 7 montre une vue du système 19 monté sur la planche de bord 13, antérieurement à un choc frontal. La pédale d'accélérateur 11A est positionnée à l'avant du système 19, et comprend une portion avant 11A.2, avec une extension latérale 11A.3 orientée vers le système 19.

Lors d'un choc de forte intensité, tel que représenté à la figure 8, la pédale d'accélérateur 11A s'enfonce vers l'habitacle du véhicule (visible à la figure 1). Une portion avant 11A.2 de la pédale 11A entre en contact avec le boîtier 21 et avec la platine de montage 29 du système d'appel d'urgence 19. Dans un premier temps, la pédale 11A entre en contact avec la paroi de la rampe d'évitement 25 (montrée à la figure 7), formée sur la platine de montage 29, ce qui permet le glissement de la pédale d'accélérateur 11A latéralement au boîtier 21. Puis la pédale 11A provoque la rupture des portions sécables 13C de la planche de bord 13, facilitant le déplacement latéral du haut-parleur et du système d'appel d'urgence 19, vers l'extérieur. La patte de fixation 23 du boîtier 21 permet en outre le pivotement du boîtier 21 autour de ladite patte 23. Ces trois mécanismes facilitent le déplacement du système d'appel d'urgence 19, donc évitent son endommagement en cas de choc frontal.

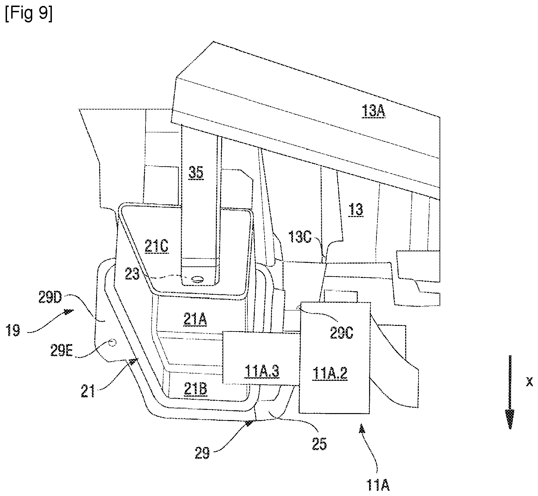

Lors d'un choc de faible intensité, tel que représenté à la figure 9, la pédale d'accélérateur 11A et, plus particulièrement, la portion avant 11A.2 de ladite pédale 11A s'enfonce vers le boîtier 21 du système d'appel d'urgence 19, l'extension latérale 11A.3 de la pédale 11A étant apte à glisser au-dessus de la portion inférieure 21B dudit boîtier 21, et à venir au contact de la portion supérieure 21A. Les portions sécables 13C de la planche de bord 13 dans ce cas ne rompent pas, et la patte de fixation 23 ne permet pas le pivotement du boîtier 21, du fait du manque de force exercée par le choc.

## Revendications

1. Véhicule automobile (1) comprenant :
- une place conducteur (7) avec un pédalier de commande (11) du véhicule (1) et une place passager (5) ;
- une planche de bord (13) s'étendant transversalement devant les places conducteur (7) et passager (5) ;
- un dispositif de coussin gonflable (17) disposé sous la planche de bord (13) en face de la place conducteur (7) et configuré pour se déployer en direction des genoux du conducteur ;
**caractérisé en ce que** le véhicule (1) comprend, en outre :
- un haut-parleur (27) d'un système d'appel d'urgence (19) disposé sous la planche de bord (13) et latéralement au pédalier (11) du côté latéral extérieur (11C) dudit pédalier (11), le système d'appel d'urgence (19) comprenant une rampe d'évitement (25) disposée latéralement au haut-parleur (27) du côté du pédalier (11), ladite rampe d'évitement (25) étant configurée pour, en cas de choc frontal déplaçant le pédalier (11) vers l'arrière, permettre le glissement dudit pédalier (11) le long du haut-parleur (27) et déplacer latéralement vers l'extérieur le haut-parleur (27).

2. Véhicule automobile (1) selon la revendication 1, **caractérisé en ce que** le haut-parleur (27) est logé dans un boîtier (21) formant une enceinte.

3. Véhicule automobile (1) selon la revendication 2, **caractérisé en ce que** l'enceinte forme une ouverture dirigée vers le bas et logeant le haut-parleur (27) également dirigé vers le bas.

4. Véhicule automobile (1) selon la revendication 3, **caractérisé en ce que** le boîtier (21) comprend, à une portion supérieure (21A) dudit boîtier (21) délimitant le fond (21C) de l'enceinte, une patte de fixation (23).

5. Véhicule automobile (1) selon les revendications de 1 à 4, **caractérisé en ce que** le déplacement latéral du haut-parleur (27) est par pivotement autour de la patte de fixation (23).

6. Véhicule automobile (1) selon l'une des revendications 1 à 5, **caractérisé en ce que** la rampe d'évitement (25) est solidaire du boîtier (21).

7. Véhicule automobile (1) selon l'une des revendications 1 à 6, **caractérisé en ce que** la rampe d'évitement (25) est formée sur une platine de montage (29) du haut-parleur (27) au boîtier (21).

8. Véhicule automobile (1) selon l'une des revendications 1 à 7, **caractérisé en ce que** la place conducteur (7) est située du côté droit du véhicule (1).

9. Véhicule automobile (1) selon la revendication 9, **caractérisé en ce que** la pédale d'accélérateur (11A) est configurée pour glisser le long de la rampe d'évidement (25).

## Patentansprüche

1. Kraftfahrzeug (1) mit:
- einem Fahrerplatz (7) mit einer Steuerkurve (11) des Fahrzeugs (1) und einem Beifahrerplatz (5);
- ein Armaturenbrett (13), das sich quer vor dem Fahrer- (7) und Beifahrerplatz (5) erstreckt;
- eine unterhalb des Armaturenbretts (13) gegenüber dem Fahrerplatz (7) angeordnete Airbagvorrichtung (17), die so ausgebildet ist, dass sie sich in Richtung auf die Knie des Fahrers erstreckt;
**dadurch gekennzeichnet, dass** das Fahrzeug (1) ferner umfasst:
- einem Lautsprecher (27) eines unter dem Armaturenbrett (13) und seitlich am Tretlager (11) auf der äußeren Seitenseite (11C) des Tretlagers (11) angeordneten Notrufsystems (19), wobei das Notrufsystem (19) eine seitlich am Lautsprecher (27) auf der Tretlagerseite (11) angeordnete Ausweichrampe (25) aufweist, wobei die Ausweichrampe (25) für den Fall eines Frontalaufpralls, der das Tretlager (11) bewegt, ausgebildet ist 1) nach hinten das Pedal (11) entlang des Lautsprechers (27) gleiten lassen und den Lautsprecher (27) seitlich nach außen bewegen.

2. Kraftfahrzeug (1) nach Anspruch 1, **dadurch gekennzeichnet, dass** der Lautsprecher (27) in einem Gehäuse (21) untergebracht ist, das ein Gehäuse bildet.

3. Kraftfahrzeug (1) nach Anspruch 2, **dadurch gekennzeichnet, dass** der Raum eine nach unten gerichtete Öffnung bildet, die den Lautsprecher (27) aufnimmt, der ebenfalls nach unten gerichtet ist.

4. Kraftfahrzeug (1) nach Anspruch 3, **dadurch gekennzeichnet, dass** das Gehäuse (21) an einem oberen Abschnitt (21A) des Gehäuses (21), der den Boden (21C) des Gehäuses begrenzt, eine Befestigungslasche (23) aufweist.

5. Kraftfahrzeug (1) nach den Ansprüchen 1 bis 4, **dadurch gekennzeichnet, dass** die seitliche Verschiebung des Lautsprechers (27) durch Schwenken um die Befestigungslasche (23) erfolgt.

6. Kraftfahrzeug (1) nach einem der Ansprüche 1 bis 5, **dadurch gekennzeichnet, dass** die Ausweichrampe (25) mit dem Gehäuse (21) fest verbunden ist.

7. Kraftfahrzeug (1) nach einem der Ansprüche 1 bis 6, **dadurch gekennzeichnet, dass** die Ausweichrampe (25) an einer Montageplatte (29) vom Lautsprecher (27) zum Gehäuse (21) angeformt ist.

8. Kraftfahrzeug (1) nach einem der Ansprüche 1 bis 7, **dadurch gekennzeichnet, dass** der Fahrerplatz (7) auf der rechten Seite des Fahrzeugs (1) angeordnet ist.

9. Kraftfahrzeug (1) nach Anspruch 8, **dadurch gekennzeichnet, dass** das Gaspedal (11A) so ausgebildet ist, dass es entlang der Aussparungsrampe (25) gleitet.

## Claims

1. Motor vehicle (1) comprising:
- a driver's seat (7) with a crankset (11) of the vehicle (1) and a passenger seat (5);
- a dashboard (13) extending transversely in front of the driver (7) and passenger (5) seats;
- an airbag device (17) arranged under the dashboard (13) facing the driver's seat (7) and configured to deploy in the direction of the driver's knees;
**characterized in that** the vehicle (1) further comprises:
- a loudspeaker (27) of an emergency call system (19) arranged under the dashboard (13) and laterally to the crankset (11) on the outer lateral side (11C) of said crankset (11), the emergency call system (19) comprising an avoidance ramp (25) arranged laterally to the loudspeaker (27) on the crankset (11) side, said avoidance ramp (25) being configured for, in the event of a frontal impact moving the crankset (11) to the rear, allow said crankset (11) to slide along the loudspeaker (27) and to move the loudspeaker (27) laterally outwards.

2. Motor vehicle (1) according to claim 1, **characterized in that** the loudspeaker (27) is housed in a housing (21) forming an enclosure.

3. Motor vehicle (1) according to claim 2, **characterized in that** the enclosure forms an opening directed downwards and housing the loudspeaker (27) also directed downwards.

4. Motor vehicle (1) according to claim 3, **characterized in that** the casing (21) comprises, at an upper portion (21A) of said casing (21) delimiting the bottom (21C) of the enclosure, a fixing lug (23).

5. Motor vehicle (1) according to claims 1 to 4, **characterized in that** the lateral displacement of the loudspeaker (27) is by pivoting about the fixing lug (23).

6. Motor vehicle (1) according to one of claims 1 to 5, **characterized in that** the avoidance ramp (25) is integral with the casing (21).

7. Motor vehicle (1) according to one of claims 1 to 6, **characterized in that** the avoidance ramp (25) is formed on a mounting plate (29) from the loudspeaker (27) to the casing (21).

8. Motor vehicle (1) according to one of claims 1 to 7, **characterized in that** the driver's seat (7) is situated on the right side of the vehicle (1).

9. Motor vehicle (1) according to claim 8, **characterized in that** the accelerator pedal (11A) is configured to slide along the recess ramp (25).
